# EUROPEAN PATENT APPLICATION

(11) **EP 4 746 135 A1**
(43) Date of publication of application: **20.05.2026**
(21) Application number: 25204491.2
(22) Date of filing: 25.09.2025
(51) Int. Cl.: H01M 10/658, H01M 50/289, H01M 50/209

(54) **BATTERY MODULE**

(30) Priority: 15.11.2024 KR 20240162934
(71) Applicant: SAMSUNG SDI CO., LTD., Yongin-si, Gyeonggi-do 17084 (KR)
(72) Inventor: Ahn, Gijang, 17084 Yongin-si (KR); Im, Jangyeong, Yongin-si 17084 (KR); Kim, Jin, 17084 Yongin-si (KR); Park, Jongtaek, 17084 Yongin-si (KR); Kim, Cheorlhwan, 17084 Yongin-si (KR); Kim, Hanjun, 17084 Yongin-si (KR)
(74) Representative: Marks & Clerk LLP

(57) **Abstract**

A battery module includes: a plurality of battery cells; and insulators between the plurality of battery cells, wherein each of the insulators includes a base portion and a folded portion extending from the base portion, and the folded portion extends to the outside of an adjacent battery cell among the plurality of battery cells and is bent to cover a side surface of the adjacent battery cell.

## Description

### BACKGROUND

### 1. Field

Aspects of some embodiments of the present disclosure relate to a battery module.

### 2. Description of the Related Art

Secondary batteries are batteries that may be repeatedly charged and discharged without damaging the secondary battery, unlike primary batteries that generally cannot be recharged. Low-capacity secondary batteries have been used in small, portable electronic devices, such as smartphones, feature phones, laptop computers, digital cameras, and camcorders, while large-capacity battery cells have been widely used as power sources for driving motors in hybrid vehicles, electric vehicles, etc., and batteries for power storage. Secondary batteries include an electrode assembly including a positive electrode and a negative electrode, a case accommodating the electrode assembly, and electrode terminals connected to the electrode assembly.

The above information disclosed in this Background section is only for enhancement of understanding of the background and therefore the information discussed in this Background section does not necessarily constitute prior art.

### SUMMARY

Aspects of some embodiments of the present disclosure include a battery module with relatively improved safety, which protects battery cells and suppresses heat transfer between cells through an insulator having a folded portion covering a vent portion when thermal runaway occurs, thereby delaying or preventing or reducing a chain reaction.

However, the characteristics of embodiments according to the present disclosure are not limited to the characteristics described above, and other characteristics not mentioned may be clearly understood by those skilled in the art from the description of the disclosure described below.

Aspects of some embodiments of the present disclosure include a battery module including a plurality of battery cells and insulators (positioned) between the plurality of battery cells, wherein each of the insulators includes a base portion and a folded portion extending from the base portion, and the folded portion extends to the (or an) outside of an adjacent battery cell among the plurality of battery cells and is bent to cover a side surface of the adjacent battery cell.

According to some embodiments, each of the plurality of battery cells may include a vent portion, and the folded portion may cover the vent portion of the adjacent battery cell.

According to some embodiments, each of the insulators may include a center layer and a reinforcing layer (positioned) on at least one of opposing surfaces of the center layer, and the center layer may include an insulating sheet.

According to some embodiments, the reinforcing layer may include an insulating and heat-resistant sheet.

According to some embodiments, an end of the folded portion of one of two adjacent insulators among the plurality of insulators may be provided to be in contact with (or contacts) the base portion of the other (or another) insulator.

According to some embodiments, two insulators with the folded portions bent in opposite directions may be provided between at least two adjacent battery cells among the plurality of battery cells.

According to some embodiments, each of the plurality of battery cells may include a pair of electrode terminals, and the folded portion may be (positioned) between the pair of electrode terminals.

According to some embodiments, the battery may further include a second insulator including only the base portion, wherein the folded portion of the (or an) insulator adjacent to the second insulator among the insulators is bent in a direction of the second insulator or in a direction away from the second insulator.

According to some embodiments, the battery module may further include a pair of end plates pressing the plurality of battery cells from outermost sides of the plurality of battery cells, wherein the insulator or the second insulator is further (provided) between the end plate (or an end plate from among the end plates) and the battery cell (or a battery cell from among the battery cells).

According to some embodiments, the second insulator may be (provided) between the end plate and the battery cell, and the folded portion of the insulator adjacent to the second insulator may be bent in a direction away from the second insulator.

According to some embodiments of the present disclosure, a battery module includes a plurality of battery cells, each including a vent portion and insulators (positioned) between the plurality of battery cells, wherein each of the insulators includes a base portion corresponding to a main surface of the battery cell and a folded portion extending from the base portion, and the folded portion is bent to cover the vent portion.

According to some embodiments, the folded portion may cover at least one of a side surface, an upper surface, or a lower surface of the battery cell (or a battery cell from among the battery cells).

According to some embodiments, each of the insulators may include a center layer and a reinforcing layer (positioned) on at least one of opposing surfaces of the center layer, and the center layer may include an insulating sheet.

According to some embodiments, the reinforcing layer may include an insulating and heat-resistant sheet.

According to some embodiments, each of the plurality of battery cells may include a pair of electrode terminals, and the folded portion may be (positioned) between the pair of electrode terminals.

According to some embodiments, two insulators having the folded portions bent in opposite directions may be (provided) between at least two adjacent battery cells among the plurality of battery cells.

According to some embodiments, an end of the folded portion of one of two adjacent insulators among the plurality of insulators may (be provided to be in) contact (with) the base portion of the other (or another) insulator.

According to some embodiments, the battery module may further include a second insulator including only the base portion, wherein the folded portion of the insulator adjacent to the second insulator among the insulators is bent in a direction of the second insulator or in a direction away from the second insulator.

According to some embodiments, the battery module may further include a pair of end plates pressing the plurality of battery cells from outermost sides of the plurality of battery cells, wherein the insulator or the second insulator is further (provided) between the end plate (or an end plate from among the end plates) and the battery cell (or a battery cell from among the battery cells).

According to some embodiments, the second insulator may be (provided) between the end plate and the battery cell, and the folded portion of the insulator adjacent to the second insulator may be bent in a direction away from the second insulator.

At least some of the above and other features of the invention are set out in the claims.

### BRIEF DESCRIPTION OF THE DRAWINGS

The following drawings attached to this specification illustrate aspects of some embodiments and, together with the detailed description of the invention described below, serve to further understand the technical idea of the present disclosure; therefore, the present disclosure should not be interpreted as being limited to matters described in such drawings in which:
FIG. 1 is an perspective view schematically illustrating an example of a battery module according to some embodiments;
FIG. 2 is an exploded perspective view schematically illustrating an example of a battery cell and an insulator of the battery module of FIG. 1;
FIG. 3 is a cross-sectional view schematically illustrating an example taken along the line III-III' of FIG. 2;
FIG. 4 is a diagram schematically illustrating a battery module according to some embodiments;
FIG. 5 is an exploded perspective view schematically illustrating a battery cell and an insulator according to some embodiments;
FIG. 6 is an exploded perspective view schematically illustrating a battery cell and an insulator according to some embodiments;
FIG. 7 is a cross-sectional view of an example of a battery cell and an insulator viewed in a first direction (y);
FIG. 8 is a diagram schematically illustrating an arrangement structure of battery cells and insulators according to some embodiments;
FIG. 9 is a diagram schematically illustrating an arrangement structure of battery cells and insulators according to some embodiments;
FIG. 10 is a perspective view schematically illustrating a battery module according to some embodiments;
FIG. 11 is a perspective view schematically illustrating a battery module according to some embodiments;
FIG. 12 is a perspective view schematically illustrating a battery module according to some embodiments;
FIG. 13 is a perspective view schematically illustrating a battery module according to some embodiments;
FIG. 14 is a diagram schematically illustrating a center layer and a reinforcing layer of an insulator according to some embodiments; and
FIG. 15 is a diagram schematically illustrating a center layer and a reinforcing layer of an insulator according to some embodiments.

### DETAILED DESCRIPTION

Hereinafter, aspects of some embodiments are described in more detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments disclosed in this specification and the configuration illustrated in the drawings are only some embodiments and do not represent all the technical idea of the present disclosure, so it should be understood that other equivalents and modifications could be made thereto without departing from the scope of the disclosure.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, for ease understanding of the present disclosure, the accompanying drawings are not drawn to real scale, but the dimensions of some components may be exaggerated. In addition, like reference numerals may be given to the like components in different embodiments.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element. In addition, when a portion is electrically coupled to another portion, this includes not only the case where it is directly connected, but also the case where it is connected with another element in between.

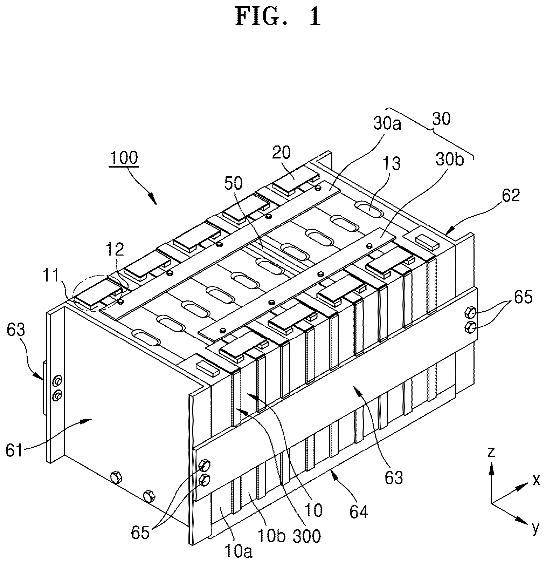

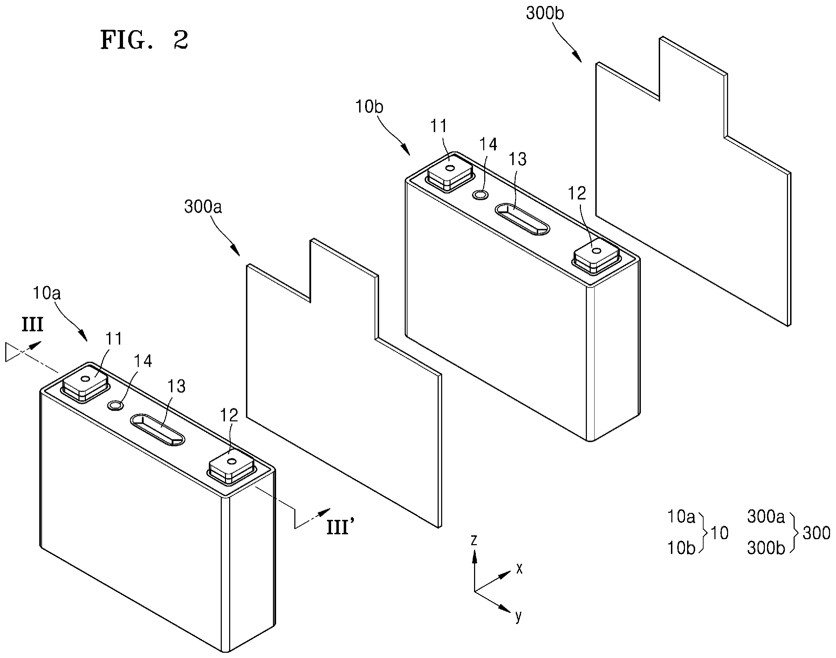

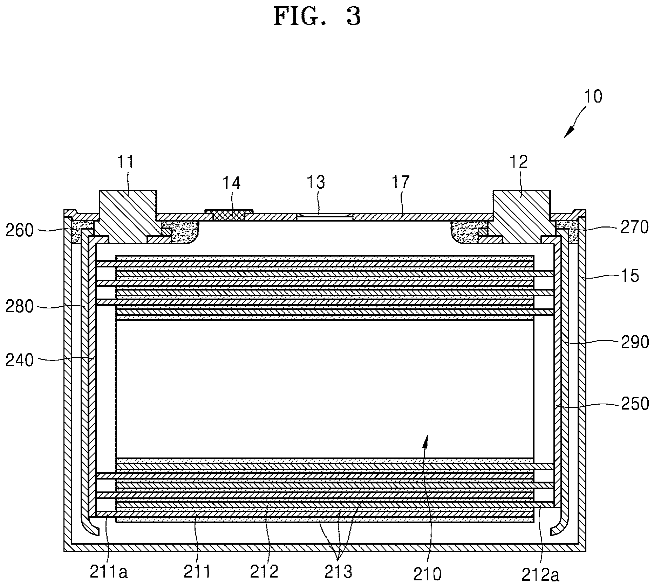

FIG. 1 is a perspective view schematically illustrating an example of a battery module 100 according to some embodiments, FIG. 2 is an exploded perspective view schematically illustrating an example of a battery cell and an insulator of the battery module 100 of FIG. 1, and FIG. 3 is a cross-sectional view schematically illustrating an example taken along the line III-III' of FIG. 2.

Referring to FIGS. 1 to 3, the battery module 100 according to some embodiments may include a plurality of battery cells 10 arranged in one direction and an insulator 300 positioned between the battery cells 10.

The battery cells 10 may be arranged in one direction so that the wide surfaces of the battery cells 10 face each other, and the arranged battery cells 10 may be fixed by housings 61, 62, 63, and 64.

The housings 61, 62, 63, and 64 may include a pair of end plates 61 and 62 facing the wide surface of the battery cell 10, a side plate 63 connecting the pair of end plates 61 and 62, and a bottom plate 64.

The side plate 63 may support the side of the battery cell 10, and the bottom plate 64 may support the bottom surface of the battery cell 10. According to some embodiments, the pair of end plates 61 and 62, the side plate 63, and the bottom plate 64 may be connected by a member, such as a bolt 65.

Each of the battery cells 10 may include terminal portions 11 and 12 and a vent portion 13 that is a passage for discharging gas occurring internally. The terminal portions 11 and 12 of the battery cell 10 may include a first terminal 11 and a second terminal 12 having different polarities. For example, in case that the first terminal 11 is a positive terminal, the second terminal 12 may be a negative terminal, and conversely, in case that the first terminal 11 is a negative terminal, the second terminal 12 may be a positive terminal. That is, the first terminal 11 and the second terminal 12 are formed to have different electrical polarities and are not limited to any polarity.

In FIG. 1, a serial connection is described as an example, but the present disclosure is not limited to this structure and various connection structures may be adopted as needed. According to some embodiments, the number and arrangement of battery cells are not limited to the structure illustrated in FIG. 1 and may be changed as needed.

The above battery module 100 includes a connection tab 20 connecting adjacent battery cells 10a and 10b and a protective circuit module 30 having one end portion connected to the connection tab 20.

The protective circuit module 30 may be a battery management system (BMS). According to some embodiments, the connection tab 20 includes a body portion that contacts the terminal portions 11 and 12 between adjacent battery cells 10a and 10b and an extension portion that extends from the body portion and is connected to the protective circuit module 30.

The protective circuit module 30 may be equipped with electronic components and protective circuits and be electrically connected to the connection tab 20.

The protective circuit module 30 may include a first protective circuit module 30a and a second protective circuit module 30b extending from different positions in a direction in which the battery cells 10 are arranged, and here, the first protective circuit module 30a and the second protective circuit module 30b may be apart from each other by a certain distance, positioned parallel to each other, and electrically connected to adjacent connection tabs 20.

For example, the first protective circuit module 30a may extend on one side in an upper portion of the battery cells 10 in the direction in which the battery cells 10 are arranged, and the second protective circuit module 30b may extend on the other upper surface in the upper portion of the battery cells 10 in the direction in which the battery cells 10 are arranged, and the second protective circuit module 30b may be positioned apart from the first protective circuit module 30a by a certain distance with the vent portion 13 therebetween and may be positioned parallel to the first protective circuit module 30a.

In this manner, the two protective circuit modules 30a and 30b are arranged parallel and apart from each other in the direction in which the battery cells 10 are arranged, thereby minimizing an unnecessary area of a printed circuit board (PCB) constituting the protective circuit module 30.

According to some embodiments, the first protective circuit module 30a may be connected to the second protective circuit module 30b by a conductive connection member 50. Here, one side of the connection member 50 may be connected to the first protective circuit module 30a, and the other side thereof may be connected to the second protective circuit module 30b, so that an electrical connection may be made between the two protective circuit modules 30a and 30b.

The connection may be made by any one of soldering, resistance welding, laser welding, or projection welding methods.

The connection member 50 may be, for example, an electric wire. According to some embodiments, the connection member 50 may include a material having elasticity or flexibility. By means of the connection member 50, the voltage, temperature, and current of the battery cells 10 may be checked and managed to ensure they are normal.

That is, information, such as voltage, current, and temperature, received by the first protective circuit module 30a from the connection tabs 20 adjacent thereto and information, such as voltage, current, and temperature, received by the second protective circuit module 30b from the connection tabs 20 adjacent thereto may be integratedly managed by the protective circuit module 30 through the connection member 50.

According to some embodiments, when the battery cell 10 swells, the shock may be absorbed by the elasticity or flexibility of the connection member 50, thereby preventing or reducing the first and second protective circuit modules 30a and 30b from being damaged.

Meanwhile, the shape and structure of the connection member 50 are not limited to the shape shown in FIG. 1.

In this manner, because the protective circuit module 30 includes the first and second protective circuit modules 30a and 30b, the area of the PCB constituting the protective circuit module 30 may be minimized, thereby securing space inside the battery module 100. This may facilitate repairs when an abnormality is detected in the battery module 100, as well as the fastening work of connecting the connection tab 20 to the protective circuit module 30, thereby improving work efficiency.

As shown in FIG. 3, the battery cell 10 may include a case 15 and an electrode assembly 210 and an electrolyte housed in the case 15. The electrode assembly 210 and the electrolyte react electrochemically to generate energy.

The battery cell 10 may include at least one electrode assembly 210 formed by winding a positive electrode 211 and a negative electrode 212 with a separator 213 as an insulator therebetween and the case 15 in which the electrode assembly 210 is housed.

The battery cell 10 according to the present embodiments is described as a prismatic lithium ion battery cell as an example. However, embodiments according to the present disclosure are not limited thereto, and embodiments according to the present disclosure may be applied to various types of battery cells, such as lithium polymer battery cells or cylindrical battery cells.

The positive electrode 211 and the negative electrode 212 may include a coated portion, which is a region in which an active material is applied to a current collector formed of a metal foil of a thin plate and positive and negative uncoated portions 211a and 212a, which are regions in which the active material is not applied.

The positive electrode 211 and the negative electrode 212 are wound with the separator 213, which is an insulator, therebetween. However, the present disclosure is not limited thereto, and the electrode assembly 210 described above may have a structure in which a positive electrode and a negative electrode formed of a plurality of sheets are alternately stacked with a separator therebetween.

The case 15 forms the overall appearance of the battery cell 10 and may include a conductive metal, such as aluminum, an aluminum alloy, or nickel-plated steel. According to some embodiments, the case 15 may provide a space in which the electrode assembly 210 is accommodated.

The battery cell 10 may include a cap plate 17 covering an opening of the case 15, and the case 15 and the cap plate 17 may include a conductive material. Here, the first terminal 11 and the second terminal 12 electrically connected to the positive electrode 211 or the negative electrode 212 may be installed to protrude outwardly by penetrating the cap plate 17.

According to some embodiments, outer circumferential surfaces of upper pillars of the first terminal 11 and the second terminal 12 protruding outwardly from the cap plate 17 may be threaded and fixed to the cap plate 17 with a nut.

However, the present disclosure is not limited thereto, and the first terminal 11 and the second terminal 12 may be formed of a rivet structure and may be riveted or may be welded to the cap plate 17.

According to some embodiments, the cap plate 17 may be formed of a thin plate and may be coupled to the opening of the case 15, an electrolyte injection port 14 into which a sealing plug may be installed may be formed in the cap plate 17, and the vent portion 13 having a notch may be installed.

The first terminal 11 and the second terminal 12 may be electrically connected to a current collector including first and second current collectors 240 and 250 (hereinafter referred to as positive and negative current collectors, respectively) welded to the positive uncoated portion 211a or the negative uncoated portion 212a.

For example, the first terminal 11 and the second terminal 12 may be respectively coupled to the positive and negative current collectors 240 and 250 by welding. However, the present disclosure is not limited thereto, and the first terminal 11 and the second terminal 12 and the positive and negative current collectors 240 and 250 may be formed integrally.

According to some embodiments, an insulator may be installed between the electrode assembly 210 and the cap plate 17. Here, the insulating member may include first and second lower insulating members 260 and 270, and each of the first and second lower insulating members 260 and 270 may be installed between the electrode assembly 210 and the cap plate 17.

According to some embodiments, one end of a separating member that may be installed to face one surface of the electrode assembly 210 may be installed between the insulating member and the first terminal 11 and the second terminal 12.

Here, the separating member may include first and second separating members 280 and 290.

Accordingly, one end of each of the first and second separating members 280 and 290 that may be installed to face one surface of the electrode assembly 210 may be installed between the first and second lower insulating members 260 and 270 and the first terminal 11 and the second terminal 12.

Finally, the first terminal 11 and the second terminal 12 welded to the positive and negative current collectors 240 and 250 may be coupled to one end of each of the first and second lower insulating members 260 and 270 and the first and second separating members 280 and 290.

Meanwhile, the insulator 300 may be positioned between the battery cells 10. The insulator 300 placed between the battery cells 10 may prevent adjacent battery cells 10a and 10b from directly contacting each other, thereby preventing, reducing, and/or alleviating heat transfer between the battery cells 10. The insulator 300 may prevent or reduce performance degradation due to output reduction of the battery cell 10 in winter and may prevent or reduce high temperature heat from spreading to the surroundings when a thermal event occurs.

When thermal runaway occurs in some battery cells 10, the insulator 300 may effectively maintain surface insulation between the battery cells 10, thereby preventing or reducing temperature rise and damage to the battery cells 10. The insulator 300 may reduce the risk of one battery cell 10a in which thermal runaway has occurred transferring heat to the adjacent battery cell 10b and reduce the risk of thermal runaway spreading within the battery module/pack.

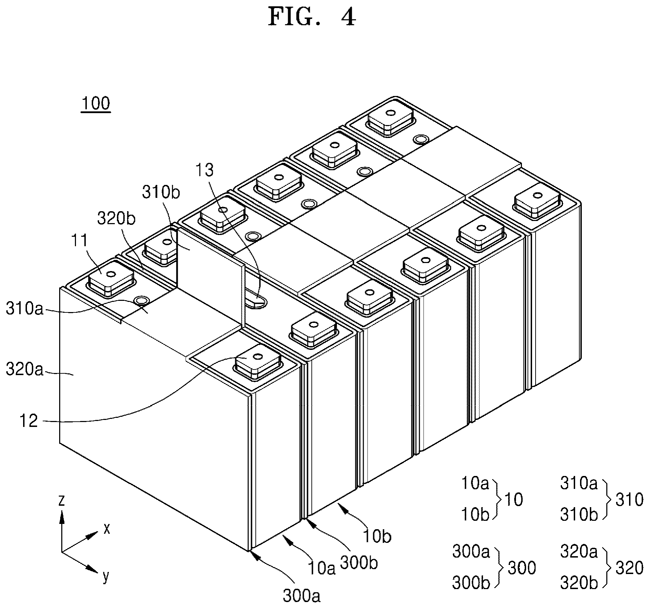

FIG. 4 is a schematic diagram of the battery module 100 according to some embodiments.

Referring to FIG. 4, the battery cell 10 may include a pair of main surfaces, an upper surface, a lower surface opposite the upper surface, and a pair of side surfaces having a relatively smaller area than the main surfaces and connecting the upper surface to the lower surface. The insulator 300 may include a base portion 320 corresponding to the main surface of the battery cell 10 and a folded portion 310 extending from the base portion 320.

The base portion 320 of the insulator 300 arranged in the arrangement direction of the battery cells 10 may prevent or reduce heat generated by the battery cells 10 being transferred to adjacent battery cells 10.

The folded portion 310 may extend to the outside of the battery cell 10 and may be bent to cover at least one of the upper surface, lower surface, or side surface of the battery cell 10. The folded portion 310 extending from the base portion 320 may be formed to have a size corresponding to the upper surface, lower surface, or side surface of the battery cell 10 and may cover the upper surface, lower surface, or side surface of the battery cell 10, and the folded portion 310 may protect the battery cell 10 and delay the heat propagation time.

In the present embodiments, for convenience of description, adjacent battery cells 10a and 10b are referred to as a first battery cell 10a and a second battery cell 10b. The insulator 300 may prevent or reduce heat transfer between the adjacent first battery cell 10a and second battery cell 10b, thereby relatively improving the safety of the battery module 100.

The strong heat, high temperature, and high pressure gases and by-products occurring during thermal runaway may rapidly be exhausted outside the battery cell 10, causing a deterioration phenomenon. Thus, the insulator 300a provided on the front of the first battery cell 10a and the insulator 300b provided between the first and second battery cells 10a and 10b may suppress heat transfer and temperature rise and protect the battery cell 10 from gas and by-products.

For example, in case that thermal runaway occurs in the second battery cell 10b, heat propagation may lead to additional thermal runaway in the adjacent first battery cell 10a.

The folded portion 310b of the insulator 300b provided between the first and second battery cells 10a and 10b is normally bent to cover the upper surface of the second battery cell 10b, thereby protecting the upper portion of the second battery cell 10b. When an event occurs, the folded portion 310b may open to block the movement of gas and by-products and act as a protective wall to protect the first battery cell 10a.

The folded portion 310b may then be completely folded to cover the upper portion of the first battery cell 10a. The folded portion 310b may protect the upper portion of the first battery cell 10a and block the spread of flames, thereby delaying or preventing or reducing instances of a chain thermal runaway reaction.

The end of the folded portion 310a of one of the plurality of insulators 300 may be provided to be in contact with the base portion 320b of another adjacent insulator 300b.

That is, the base portion 320a and the folded portion 310a of the insulator 300a may be in contact with the base portion 320b of another adjacent insulator 300b, while covering the main surface and the upper surface, lower surface, or side surface of the battery cell 10 together.

Through this, the insulators 300 covering the battery cells 10 are connected to each other without a gap, thereby protecting the battery cells 10 and effectively preventing or reducing heat transfer between the adjacent battery cells 10a and 10b.

Meanwhile, each of the battery cells 10 includes a pair of terminal portions 11 and 12, and the folded portion 310 may be positioned between the terminal portions 11 and 12. For example, the folded portion 310 may be positioned between electrode terminals positioned on the upper surface of the battery cell 10.

In the related art, to protect the upper portion of the battery cell, a separate cap plate protective sheet was required in addition to an insulating sheet placed between the cells. Meanwhile, the insulator 300 of the present disclosure may protect the cap plate without additional parts and processes because the folded portion 310 is positioned between the electrode terminals.

The base portion 320 of the insulator 300 may effectively block heat transfer, while withstanding high temperature heat, and the folded portion 310 may block gas and by-products penetrating between the cap plate and a bus bar holder. According to some embodiments, because the folded portion 310 extends from the base portion 320, problems, such as reduced adhesive strength of the existing protective sheet, do not arise, and the folded portion 310 may serve to insulate the battery cells and protect the upper portions of the battery cells 10 without requiring additional parts.

Each of the battery cells 10 includes the vent portion 13, and the folded portion 310 may be bent to cover the vent portion 13.

In case that thermal runaway occurs in one of the battery cells 10, high-temperature gas and flames may be released from the vent portion 13. In case that the gas and by-products discharged with heat penetrate into adjacent or surrounding cells, the battery cells 10 and components may be damaged.

According to some embodiments, this may rapidly heat the battery cell 10 and cause accelerated deterioration of the vent portion 13, shortening the heat propagation time by premature rupture and melting of the vent portion 13.

Thus, the folded portion 310 of the insulator 300 of the present disclosure is bent to cover the vent portion 13, thereby protecting the vent portion 13. The folded portion 310 may block the inflow of emitted gas and by-products and prevent or reduce deterioration. According to some embodiments, by covering the vent portion 13, the occurrence of additional events may be delayed, reduced, or prevented and the safety of the battery module 100 may be relatively improved.

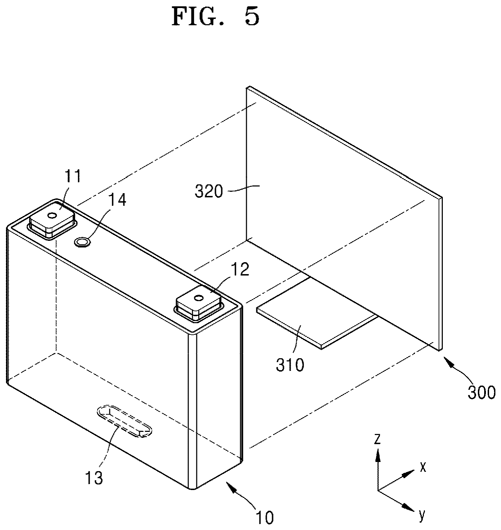

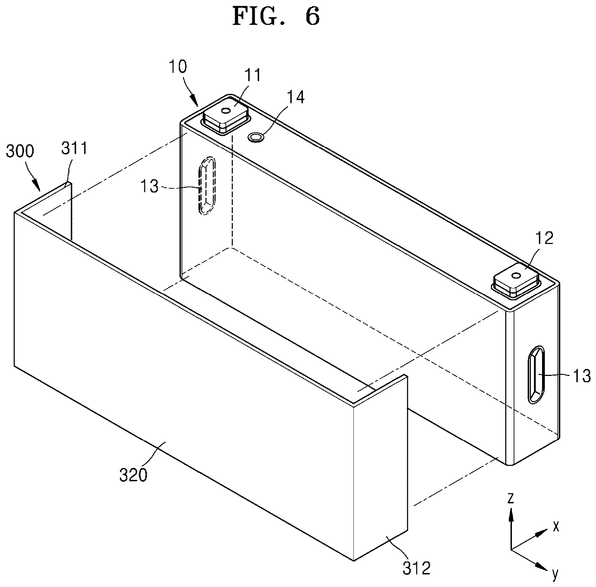

FIG. 5 is an exploded perspective view schematically illustrating the battery cell 10 and the insulator 300 according to some embodiments, and FIG. 6 is an exploded perspective view schematically illustrating the battery cell 10 and the insulator 300 according to some embodiments.

Referring to FIGS. 5 and 6, the vent portion 13 may be positioned on the upper surface, lower surface, both side surfaces or one side surface of the battery cell 10.

For example, as shown in FIG. 5, when the vent portion 13 is positioned on the lower surface of the battery cell 10, the insulator 300 may include the base portion 320 and the folded portion 310 extending downward from the base portion 320. Here, the base portion 320 may suppress heat transfer between cells, and the folded portion 310 may cover the vent portion 13 to prevent or reduce instances of a chain fire reaction.

For example, as shown in FIG. 6, when the vent portion 13 is positioned on opposing sides of the battery cell 10, the insulator 300 may include the base portion 320 and a plurality of folded portions 311 and 312 extending in a lateral direction of the base portion 320. Here, the base portion 320 may suppress heat transfer between cells, and the folded portions 311 and 312 may cover the vent portion 13 to prevent or reduce instances of a chain fire reaction.

The folded portions 311 and 312 formed on opposing sides may be in contact with the base portion 320 of the adjacent insulator 300. Accordingly, the pair of main surfaces and opposing side surfaces of the battery cells 10 may be surrounded by the insulator 300 arranged without a gap. This may protect the battery cell 10 from internal and external impacts and provide excellent insulation effect. According to some embodiments, a structure capable of effectively blocking the propagation of thermal runaway may be provided.

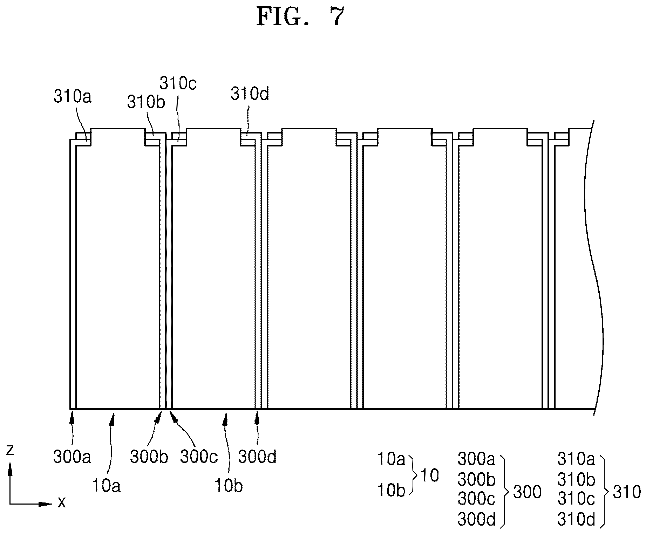

FIG. 7 is a cross-sectional view of an example of the battery cell 10 and the insulator 300 viewed in the first direction (y).

Referring to FIG. 7, two insulators 300 with folded portions 310 folded in opposite directions may be provided between at least two adjacent battery cells 10a and 10b among a plurality of battery cells 10.

As illustrated, two insulators 300b and 300c may be positioned between adjacent battery cells 10a and 10b. The insulators 300b and 300c may reduce the risk of thermal runaway spread through an insulation effect.

That is, by arranging the insulators 300 between the battery cells 10, heat transfer between the battery cells 10 may be effectively prevented or reduced and relatively excellent insulation properties may be secured to reduce the risk of heat propagation and thermal runaway spread.

For example, when the battery cells 10 are arranged in a continuous manner with two insulators 300 placed between the battery cells 10, the two folded portions 310 may be bent toward one battery cell 10.

As illustrated, two folded portions 310c and 310d may be bent toward one battery cell 10b and cover the same vent portion. The folded portions 310c and 310d may prevent or reduce rapid deterioration of the vent portion, thereby reducing the risk of thermal runaway spread.

That is, the folded portions 310 bent toward one battery cell 10 may effectively protect or reduce the vent portion from gas and by-products released during thermal runaway, thereby preventing or reducing instances of the occurrence of a deterioration phenomenon. According to some embodiments, the risk of thermal runaway spread may be reduced by delaying the heat propagation time.

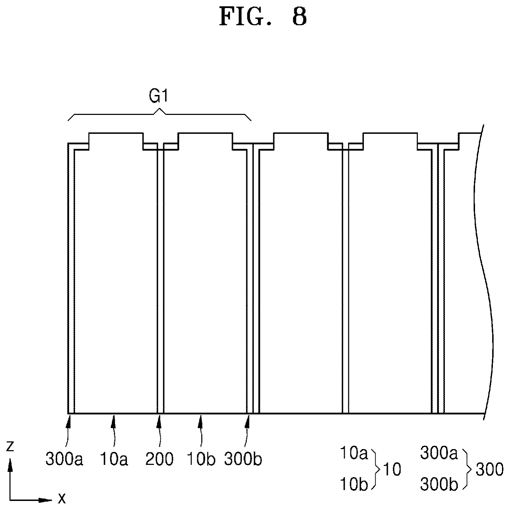

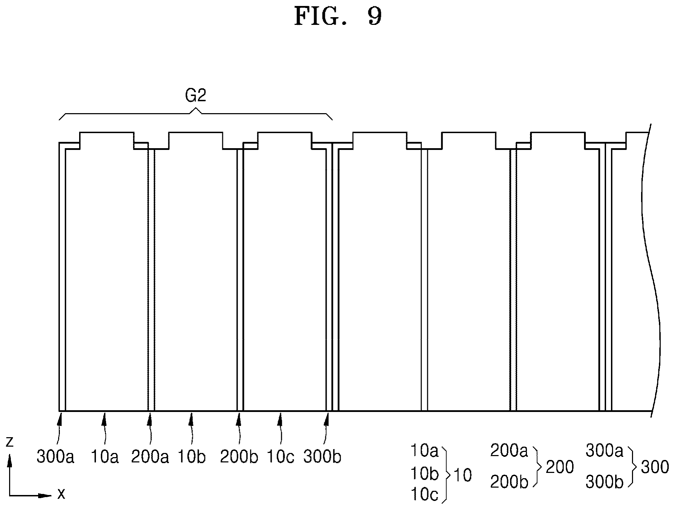

FIG. 8 is a diagram schematically illustrating an arrangement structure of battery cells and insulators according to some embodiments, and FIG. 9 is a diagram schematically illustrating an arrangement structure of battery cells and insulators according to some embodiments.

Referring to FIGS. 8 and 9, a battery module of the present disclosure further includes a second insulator 200 including only a base portion, and a folded portion of the insulator 300 adjacent to the second insulator 200 among the insulators 300 may be bent in the direction of the second insulator 200 or in the direction away from the second insulator 200.

Here, the second insulator 200 may include a material different from that of the insulator 300. For example, the second insulator 200 may be, but is not limited to, a mica sheet which has excellent insulation performance and is low in price. By mixedly arranging the insulator 300 and the second insulator 200 between the battery cells 10, the battery module with excellent insulation performance and reduced cost may be manufactured.

The battery module according to some embodiments may have an arrangement format in which a unit array G1 of two battery cells 10, an insulator 300, and a second insulator 200 is repeated.

For example, insulators 300a and 300b may be positioned on the outermost side of two adjacent battery cells 10a and 10b and a second insulator 200 may be positioned between the battery cells 10a and 10b.

By mixedly placing the insulator 300 and the second insulator 200, the battery module that secures insulation performance, while reducing manufacturing costs, may be manufactured.

When the units of such an array are repeatedly arranged, two insulators 300 with folded portions bent in opposite directions may be provided between two adjacent battery cells 10. By arranging a plurality of insulators 300 between the battery cells 10, heat transfer between the battery cells 10 may be effectively prevented or reduce and temperature rise of the battery cells 10 may be delayed. Therefore, thermal runaway, a chain reaction of explosions caused by heat propagation, may be prevented or reduced.

A battery module according to some embodiments may have an arrangement format in which a unit array G2 of a plurality of battery cells 10, an insulator 300, and a second insulator 200 is repeated.

For example, the insulators 300a and 300b may be positioned on the outermost side of three adjacent battery cells 10a, 10b, and 10c, and the second insulators 200a and 200b may be respectively positioned between the battery cells 10a, 10b, and 10c.

By mixedly placing the insulator 300 and the second insulator 200, the battery module that secures insulation performance, while reducing manufacturing costs, may be manufactured.

When the units of such an array are repeatedly arranged, two insulators 300 with folded portions bent in opposite directions may be provided between two adjacent battery cells 10. By arranging the insulators 300 between the battery cells 10, heat transfer between the battery cells 10 may be effectively prevented or reduced and temperature rise of the battery cells 10 may be delayed. Therefore, thermal runaway, a chain reaction of explosions caused by heat propagation, may be prevented or reduced.

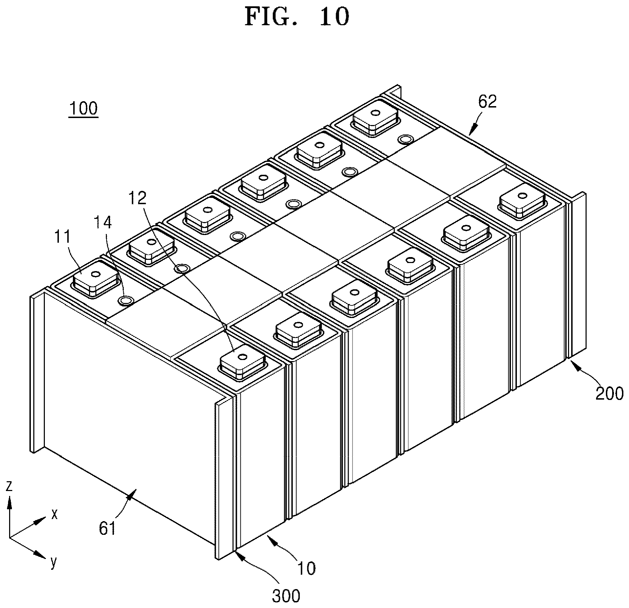

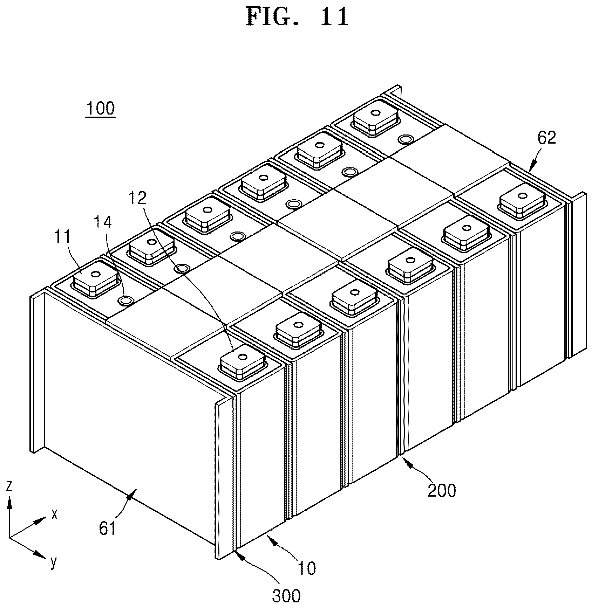

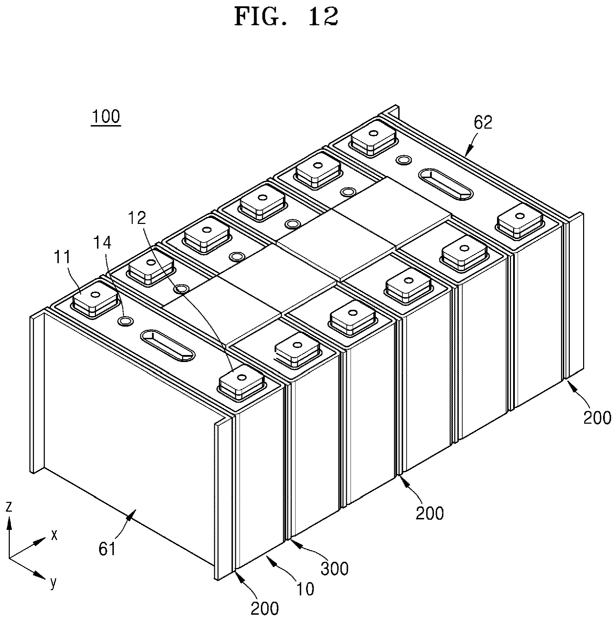

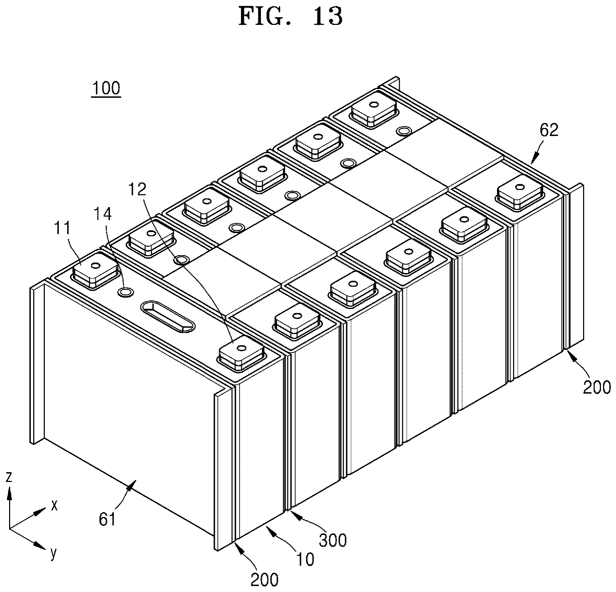

FIG. 10 is a perspective view schematically illustrating a battery module 100 according to some embodiments, FIG. 11 is a perspective view schematically illustrating a battery module 100 according to some embodiments, FIG. 12 is a perspective view schematically illustrating a battery module 100 according to some embodiments, and FIG. 13 is a perspective view schematically illustrating a battery module 100 according to some embodiments.

Referring to FIGS. 10 to 13, the battery module 100 of the present disclosure may include a pair of end plates 61 and 62 that press the battery cells 10 at the outermost sides of the battery cells 10.

The pair of end plates 61 and 62 may protect components of the battery module 100 including the battery cells 10 from external impact. According to some embodiments, physical deformation occurring inside the battery module 100, such as swelling, may be prevented or reduced, thereby preventing or reducing performance degradation of the battery cell 10 and improving the structural stability of the battery module 100.

The insulator 300 or the second insulator 200 may be further provided between the end plates 61 and 62 and the battery cell 10. The insulator 300 or the second insulator 200 may effectively control high temperature heat generated by the battery cell 10 and prevent or reduce the heat spreading to the surrounding battery cell 10 or components.

As illustrated, the insulator 300 or the second insulator 200 may be positioned between one end plate 61 and the battery cell 10, and the insulator 300 or the second insulator 200 may be positioned between the other end plate 62 and the battery cell 10.

That is, the insulator 300 and the second insulator 200 may be mixedly placed between the end plates 61 and 62 and the battery cells 10 and between the battery cells 10. The folded portion of the insulator 300 may be bent toward the second insulator 200 or away from the second insulator 200, and the insulator 300 and the second insulator 200 may be arranged symmetrically or asymmetrically.

For example, between the pair of end plates 61 and 62 and the battery cells 10 adjacent thereto, the insulator 300 may be positioned all therebetween, the second insulator 200 may be positioned all therebetween, or the insulator 300 may be positioned on one side and the second insulator 200 may be positioned on the other side.

According to some embodiments, the insulator 300 and the second insulator 200 may be arranged in various configurations between the end plates 61 and 62 and the battery cells 10 and between the battery cells 10.

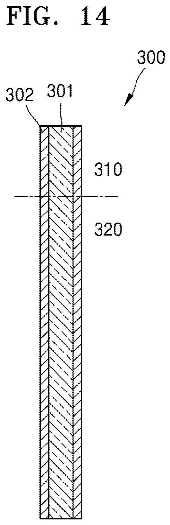

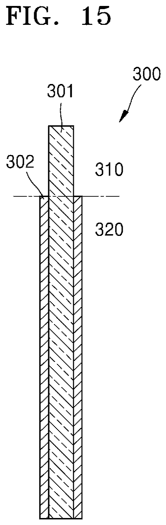

FIG. 14 is a diagram schematically illustrating a center layer 301 and a reinforcing layer 302 of the insulator 300 according to some embodiments, and FIG. 15 is a diagram schematically illustrating a center layer 301 and a reinforcing layer 302 of the insulator 300 according to some embodiments.

Referring to FIGS. 14 and 15, the insulator 300 may include the center layer 301 and the reinforcing layer 302 positioned on at least one of the two sides of the center layer 301.

Here, the center layer 301 may be an insulating sheet containing aerogel, and the reinforcing layer 302 may be an insulating and heat-resistant reinforcing sheet containing mica.

According to some embodiments, in the insulator 300, the entire surface area of at least one of the two surfaces of the center layer 301 may be covered with the reinforcing layer 302. That is, the entire area including the folded portion 310 and the base portion 320 may include the center layer 301 and the reinforcing layer 302.

For example, the aerogel may be covered with a mica film or sheet, and the insulator 300 may provide enhanced heat resistance along with the functions of insulation and shock absorption. This delays heat propagation, which is the transmission of high temperature heat to the surroundings, and prevents or reduces instances of fire caused by thermal runaway.

According to some embodiments, in the insulator 300, a partial area of at least one of opposing surfaces of the center layer 301 may be covered with the reinforcing layer 302, for example, the reinforcing layer 302 may be positioned to cover only the base portion 320 of the insulator 300. That is, the base portion 320 may include the center layer 301 and the reinforcing layer 302, and the folded portion 310 may include only the center layer 301.

The base portion 320 including the center layer 301 and the reinforcing layer 302 may serve to prevent or reduce a flame propagation to block the spread of flame by providing reinforced insulation and heat resistance. The folded portion 310 including only the center layer 301 may be in close contact with the battery cell when bent to protect one side of the cell and delay additional ignition or explosion.

A thickness of the insulator 300 may be less than 5 mm. In case that the thickness exceeds 5 mm, a spacing between adjacent battery cells may increase, which may cause an increase in the volume per unit capacity of the battery module.

According to some embodiments, an increase in the thickness of the insulator 300 may make it difficult to secure a space for bending toward the battery cell, and because the folded portion 310 cannot be in close contact with and sufficiently cover the battery cell, foreign substances, etc. may be introduced between the folded portion 310 and the battery cell.

The battery module according to some embodiments of the present disclosure including the insulator placed between the battery cells may prevent or reduce serial thermal runaway. The battery module with relatively improved safety may be provided by insulating and protecting the battery cells through the base portion of the insulator and blocking the inflow of gas and by-products through the folded portion covering the vent portion.

Although the present disclosure has been described above by means of limited embodiments and drawings, the present disclosure is not limited thereto, and it is obvious that various modifications and variations may be made within the scope of the present disclosure and the equivalent scope of the claims to be described below, and their equivalents, by a person skilled in the art to which the present disclosure pertains.

According to embodiments, the insulator placed between battery cells and covering the vent portion may delay a temperature rise of the cells and insulate and protect the battery cells without additional components and processes. This may relatively improve the safety of the battery module by delaying or preventing or reducing thermal runaway from spreading throughout the entire battery module.

However, the effects obtainable through the present disclosure are not limited to the effects described above, and other technical effects not mentioned will be clearly understood by those skilled in the art from the description of the disclosure described below.

## Claims

1. A battery module comprising:
a plurality of battery cells; and
insulators between the plurality of battery cells,
wherein each of the insulators includes a base portion and a folded portion extending from the base portion, and
the folded portion extends to an outside of an adjacent battery cell among the plurality of battery cells and is bent to cover a side surface of the adjacent battery cell.

2. The battery module of claim 1, wherein
each of the plurality of battery cells includes a vent portion, and
the folded portion covers the vent portion of the adjacent battery cell.

3. The battery module of claim 1 or claim 2, wherein
each of the insulators includes a center layer and a reinforcing layer on at least one of opposing surfaces of the center layer, and
the center layer includes an insulating sheet.

4. The battery module of claim 3, wherein
the reinforcing layer includes an insulating and heat-resistant sheet.

5. The battery module of any preceding claim, wherein
an end of the folded portion of one of two adjacent insulators among the insulators contacts the base portion of another insulator.

6. The battery module of any preceding claim, wherein
two insulators with the folded portions bent in opposite directions are between at least two adjacent battery cells among the plurality of battery cells.

7. The battery module of any preceding claim, wherein
each of the plurality of battery cells includes a pair of electrode terminals, and
the folded portion is between the pair of electrode terminals.

8. The battery module of any preceding claim, further comprising:
a second insulator including only the base portion,
wherein the folded portion of an insulator adjacent to the second insulator among the insulators is bent in a direction of the second insulator or in a direction away from the second insulator.

9. The battery module of claim 8, further comprising:
a pair of end plates pressing the plurality of battery cells from outermost sides of the plurality of battery cells,
wherein the insulator or the second insulator is further between an end plate from among the end plates and a battery cell from among the battery cells.

10. The battery module of claim 9, wherein
the second insulator is between the end plate and the battery cell, and
the folded portion of the insulator adjacent to the second insulator is bent in a direction away from the second insulator.

11. A battery module comprising:
a plurality of battery cells, each including a vent portion; and
insulators between the plurality of battery cells,
wherein each of the insulators includes a base portion corresponding to a main surface of the battery cell and a folded portion extending from the base portion, and
the folded portion is bent to cover the vent portion.

12. The battery module of claim 11, wherein
the folded portion covers at least one of a side surface, an upper surface, or a lower surface of a battery cell from among the battery cells.

13. The battery module of claim 11 or claim 12, wherein
each of the insulators includes a center layer and a reinforcing layer on at least one of opposing surfaces of the center layer, and
the center layer includes an insulating sheet.

14. The battery module of claim 13, wherein
the reinforcing layer includes an insulating and heat-resistant sheet.

15. The battery module of any of claims 11 to 14,
(A) wherein each of the plurality of battery cells includes a pair of electrode terminals, and the folded portion is between the pair of electrode terminals;
and/or
(B) wherein two insulators having the folded portions bent in opposite directions are between at least two adjacent battery cells among the plurality of battery cells;
and/or
(C) wherein an end of the folded portion of one of two adjacent insulators among the insulators contacts the base portion of another insulator;
and/or
(D) comprising: a second insulator including only the base portion, wherein the folded portion of an insulator adjacent to the second insulator among the insulators is bent in a direction of the second insulator or in a direction away from the second insulator;
and/or
(E) comprising: a pair of end plates pressing the plurality of battery cells from outermost sides of the plurality of battery cells, wherein the insulator or the second insulator is further between an end plate from among the end plates and a battery cell from among the battery cells; and, optionally, wherein the second insulator is between the end plate and the battery cell, and the folded portion of the insulator adjacent to the second insulator is bent in a direction away from the second insulator.
